# DEMANDE DE BREVET EUROPEEN

(11) **EP 1 974 989 A1**
(43) Date de publication de la demande: **01.10.2008**
(21) Numéro de dépôt: 08305027.8
(22) Date de dépôt: 20.02.2008
(51) Int. Cl.: B60N 2/30

(54) **Systeme d'assistance a l'escamotage d'un siege**

(30) Priorité: 21.02.2007 FR 0753404
(71) Demandeur: Peugeot Citroën Automobiles SA, 78140 Vélizy-Villacoublay (FR)
(72) Inventeur: Gomes, Antonio, 78560 Le Port Marly (FR)

(57) **Abrégé**

L'invention se rapporte à un siège (1) comportant un système d'escamotage (7) comprenant un premier dispositif d'articulation (9) permettant de rabattre le dossier (3) sur l'assise (5) et un deuxième dispositif d'articulation (11) permettant d'escamoter le siège (1) rabattu dans une cavité (19) adjacente. Selon l'invention, le système d'escamotage (7) comprend en outre un dispositif d'assistance (15) audit deuxième dispositif d'articulation afin d'aider à l'escamotage et à l'extraction dudit siège par rapport à ladite cavité.

L'invention trouve son application notamment dans le domaine des sièges.

## Description

L'invention se rapporte à un siège comportant un système d'escamotage dans une cavité et plus particulièrement à un tel système comportant un dispositif d'assistance.

Les sièges de véhicules automobiles actuels possèdent de multiples modularités (mise en tablette, glissières, etc.) et équipements (ceinture de sécurité, coussin gonflable, etc.) qui les complexifie et par voie de conséquence augmente leur masse. Ainsi, dans le cas des sièges qui s'effacent entièrement dans une cavité, il peut être difficile, en raison de leur masse, de les manoeuvrer sans un effort physique conséquent.

Le but de la présente invention est de pallier tout ou partie les inconvénients cités précédemment en proposant un système d'escamotage qui comporte un dispositif d'assistance à l'escamotage mais également à l'extraction du siège d'une cavité.

A cet effet, l'invention se rapporte à un siège comportant un système d'escamotage comprenant un premier dispositif d'articulation permettant de rabattre le dossier sur l'assise et un deuxième dispositif d'articulation permettant d'escamoter le siège rabattu dans une cavité adjacente caractérisé en ce que le système d'escamotage comprend en outre au moins un dispositif d'assistance audit deuxième dispositif d'articulation afin d'aider à l'escamotage et à l'extraction dudit siège par rapport à ladite cavité.

II est ainsi possible, avec le même dispositif, d'amortir l'accélération du mouvement du siège initié par son poids lors de l'escamotage dans la cavité mais également de fournir un effort de poussée lors de l'extraction du siège hors de la cavité afin de diminuer les efforts à fournir par l'utilisateur dans ces deux mouvements.

Conformément à d'autres caractéristiques avantageuses de l'invention :
- le dispositif d'assistance comporte des moyens amortisseurs solidaires de ladite cavité et des moyens de transmission mécanique montés pivotants entre l'assise dudit siège et lesdits moyens amortisseurs permettant au dispositif d'assistance de fonctionner de manière déportée par rapport au siège ce qui autorise au dispositif d'assistance de pouvoir être intégré sur une paroi de la cavité ;
- les moyens amortisseurs comportent un premier vérin dont les extrémités sont montées pivotantes respectivement sur lesdits moyens de transmission mécanique et la première extrémité d'un deuxième vérin, la deuxième extrémité du deuxième vérin étant montée dans ladite cavité afin de permettre le découplage du mouvement d'assistance en deux phases ce qui rend possible d'assister faiblement le début de l'escamotage puis plus fortement la fin ;
- l'axe de pivotement entre les deux vérins est monté mobile dans une gorge afin de faciliter le fractionnement du travail consécutif de chaque vérin et qui permet de faire fonctionner en compression au début de l'escamotage exclusivement le deuxième vérin ;
- la direction du corps du deuxième vérin est constante pendant ledit mouvement d'assistance ce qui permet l'optimisation de la compression du deuxième vérin ;
- la direction du corps du premier vérin est variable pendant ledit mouvement d'escamotage ce qui permet de compenser le mouvement du siège ;
- le premier vérin comporte une force développée supérieure au deuxième vérin afin de faciliter la consécutivité du travail des vérins ;
- les moyens de transmission mécanique comportent un bras sensiblement en L dont le coin est monté pivotant par rapport à ladite cavité ce qui permet dans un premier temps de transmettre le mouvement du siège puis finalement de mettre les vérins en arc-boutement.

L'invention se rapporte également à un véhicule automobile caractérisé en ce qu'il comporte au moins un siège conforme à l'une des variantes précédentes.

D'autres particularités et avantages ressortiront clairement de la description qui en est faite ci-après, à titre indicatif et nullement limitatif, en référence aux dessins annexés, dans lesquels :
- les figures 1, 3 et 5 représentent en perspective le mouvement d'escamotage du siège en trois positions successives ;
- les figures 2, 4 et 6 représentent en vue de côté le mouvement d'assistance des moyens amortisseurs en trois positions successives.

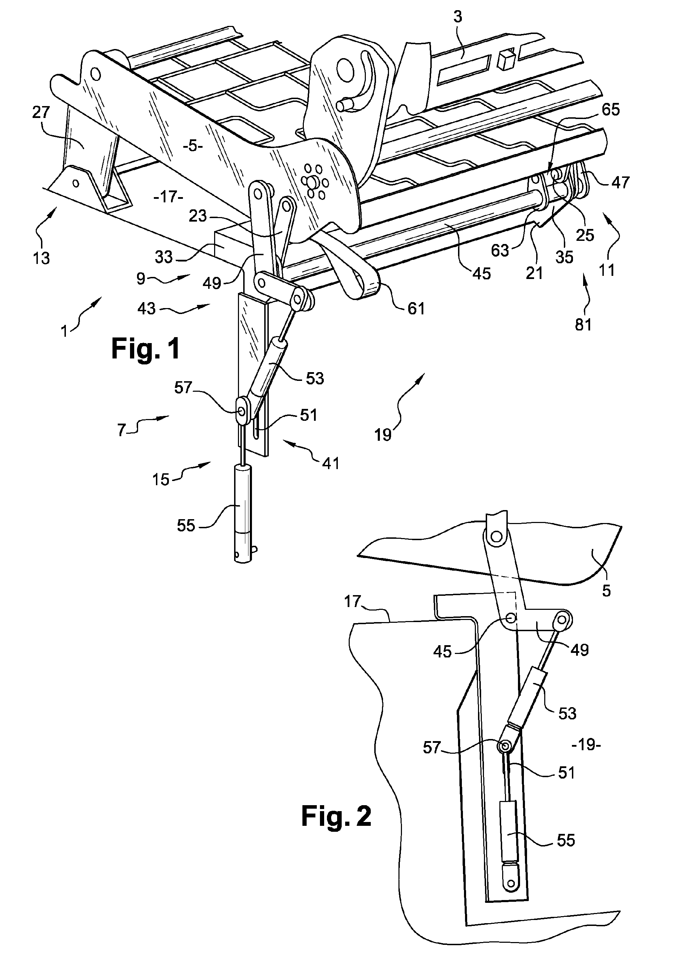

Comme illustré à la figure 1, on peut voir une représentation partielle en perspective d'un siège généralement annoté 1. Il comporte un dossier 3, une assise 5 et un système d'escamotage 7. Le système d'escamotage 7 comporte principalement un premier dispositif d'articulation 9, un deuxième dispositif d'articulation 11, des moyens de verrouillage 13 et un dispositif d'assistance 15. Le premier dispositif d'articulation 9 comporte de manière connue une articulation propre à entraîner à rotation le bas du dossier 3 entre une position utile sensiblement verticale contre laquelle une personne peut s'adosser et une position rabattue, également appelée mise en tablette, en vis-à-vis de l'assise 5, c'est-à-dire sensiblement horizontale.

Le deuxième dispositif d'articulation 11 consiste en une articulation de l'assise 5 par rapport à un plancher 17 du véhicule. L'articulation est ainsi propre à entraîner à rotation l'arrière de l'assise 5 entre une position extraite sensiblement posée sur le plancher 17 au moyen de deux pieds 27 et une position escamotée (le dossier 3 étant dans sa position rabattue) dans laquelle l'ensemble du siège est sensiblement situé sous le plancher 17 dans une cavité 19 prévue pour recevoir le siège 1 dont le dossier 3 est rabattu. L'articulation comporte principalement une platine 21 et deux bielles 23 et 25. La platine 21 est montée en-dessous et sensiblement en arrière du siège 1. Elle comporte une plaque 31 fixée sur le plancher 17 comprenant latéralement deux flasques 33 et 35 qui s'étendent vers le dessous du plancher 17. Les deux bielles 23 et 25 sont montées pivotantes sur respectivement les flasques 33 et 35 afin de guider en rotation l'escamotage du siège 1 dans la cavité 19.

Préférentiellement, le deuxième dispositif d'articulation 11 fonctionne en coopération avec le dispositif de verrouillage 13. Le dispositif de verrouillage 13 comporte un axe 37 formant gâche sur lequel s'encliquètent le pêne (non visible) de chaque pied 27 de l'assise 5. Cette configuration est préférée afin que le siège 1 ne soit pas entraîné en rotation par le deuxième dispositif d'articulation 11 sous l'effet, par exemple, d'un freinage trop brusque du véhicule.

Avantageusement selon l'invention, le système d'escamotage 7 comporte également un dispositif d'assistance 15 qui fonctionne simultanément avec le deuxième dispositif d'articulation 11 lors de l'escamotage ou l'extraction du siège 1 par rapport à la cavité 19. Il est utilisé pour limiter les efforts à fournir pour manipuler le siège 1. Préférentiellement, le système d'escamotage 7 comporte un dispositif d'assistance 15 monté latéralement au siège 1 sur une paroi de la cavité 19. Cependant, il peut être prévu un dispositif d'assistance 15 de chaque côté du siège 1 sur deux parois en vis-à-vis de la cavité 19 pour amplifier les forces d'assistance.

Chaque dispositif d'assistance 15 comporte principalement des moyens amortisseurs 41 et des moyens de transmission mécanique 43. Les moyens de transmission mécanique 43 comportent un arbre 45, une bielle de guidage 47 et un bras 49. L'arbre 45 est monté pivotant et traversant entre les deux flasques 33 et 35. II est utilisé pour transmettre, à chaque côté de l'assise 5, le mouvement d'assistance. Dans la solution préférée telle présentée dans les figures, il n'existe qu'un seul dispositif d'assistance 15. Par conséquent, une bielle de guidage 47 est utilisée afin de garantir une symétrie d'application du mouvement d'assistance entre chaque côté de l'assise 5. Les extrémités de la bielle 47 sont donc reliées respectivement fixement à l'arbre 45 et pivotant par rapport à l'assise 5. Le bras 49, sensiblement en forme de L, est relié à chacune de ses extrémités de façon pivotante respectivement à l'assise 5 et aux moyens amortisseurs 41, et au niveau de son coin de façon fixe par rapport à l'arbre 45. Le bras 49 permet donc de coupler le mouvement entre l'assise et les moyens amortisseurs 41 mais également de le transmettre à l'arbre 45.

Préférentiellement selon l'invention, le dispositif d'assistance 15 comporte deux phases distinctes d'assistance à savoir la phase de début de l'escamotage qui est préférée peu assistée et une phase de fin qui est très assistée. Bien entendu, ces phases sont inversées lors de l'extraction où le début sera très assisté et la fin peu assistée. Pour obtenir de manière préférée cette prestation à partir du bras 49, les moyens amortisseurs 41 comportent principalement une gorge 51 et deux vérins 53, 55.

Comme visibles aux différentes figures, un premier vérin 53 est monté de façon pivotante respectivement à l'extrémité du bras 49 opposée à celle qui montée sur l'assise 5 et au deuxième vérin 55. Le deuxième vérin 55 est monté de manière pivotante respectivement au premier 53 comme expliqué ci-dessus et à une des parois de la cavité 19. Comme visible à la figure 1, l'axe 57 de pivotement entre les deux vérins 53 et 55 est monté mobile dans la gorge 51. La gorge 51 peut, par exemple, être réalisée par perçage dans une paroi de la cavité 19 ou d'une pièce rapportée qui peut être un des flasques 33, 35.

Préférentiellement selon l'invention pour aider à obtenir deux phases distinctes d'escamotage, la force développée par le premier vérin 53 est supérieure à celle du deuxième 55. De manière préférée, le rapport est de 4/1 comme, par exemple, 400 N pour le premier vérin 53 et 100 N pour le deuxième 55. De manière préférée et pour permettre d'encore améliorer cette consécutivité des phases d'assistance, la gorge 51 est orientée selon la même direction que le corps du deuxième vérin 55 afin que ce dernier travaille en compression de manière sensiblement rectiligne, c'est-à-dire sans risque d'arc-boutement.

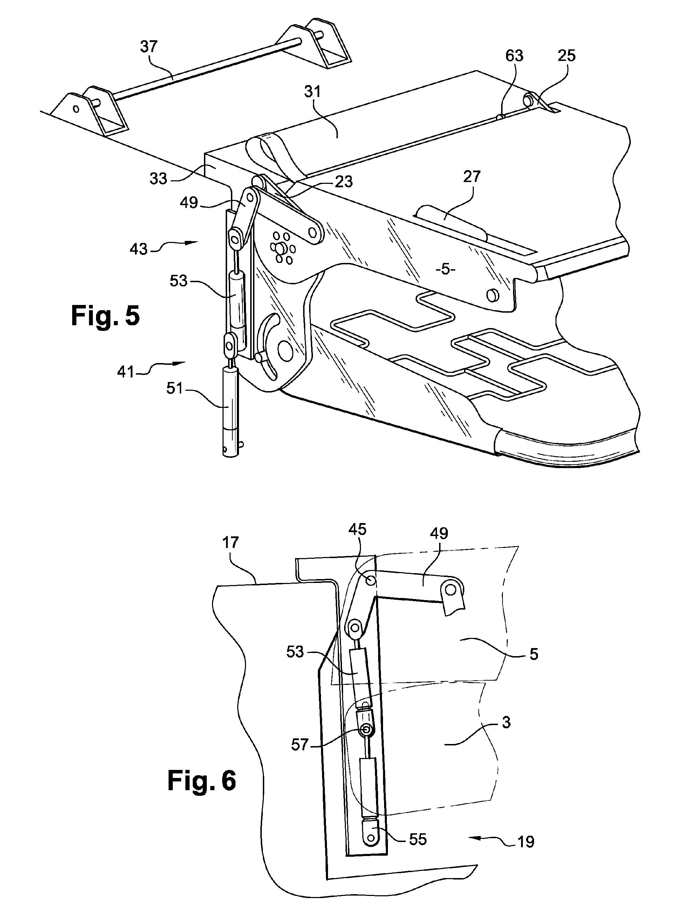

Avantageusement selon l'invention, le siège 1 comporte également un dispositif de rétraction 81 des pieds 27 qui coopèrent avec le dispositif d'assistance 15. En effet, plutôt que d'avoir à déplacer manuellement les pieds 27, il est prévu le dispositif de rétraction 81 qui dérive une partie de l'effort de déplacement du siège 1 pour escamoter les pieds 27 dans l'assise 5. Comme visible aux figures 1 et 5, le dispositif de rétraction comporte un excentrique 63, une bielle de renvoi 65 et un câblage (non représenté) raccordé aux pieds 27. L'excentrique 63 est monté fixe radialement sur l'arbre 45 et est raccordé à pivotement à la bielle 65. La bielle de renvoi 65 est reliée fixement audit câblage ce qui permet ainsi de communiquer le pivotement de l'excentrique 63 en le transformant par un tirage dudit câblage apte à simultanément escamoter les pieds 27 dans l'assise 5.

Le fonctionnement du dispositif d'assistance 15 va maintenant être expliqué au regard des figures combinées par paires successives 1-2, 3-4 et 5-6 correspondant à des positions du siège 1 respectivement en positions utile, semi-escamotée et entièrement escamotée.

Dans la position utile du siège 1 visible aux figures 1 et 2, les pieds 27 sont verrouillés sur l'axe 37 à l'aide du dispositif de verrouillage 13. L'assise 5 est sensiblement horizontale et le dossier 3 sensiblement vertical. Une personne peut donc s'y asseoir. Comme visible à la figure 2, dans la position utile du siège 1, le deuxième vérin 55 est sensiblement vertical et le premier vérin 53 est incliné vers la cavité 19 selon un angle compris entre 120 et 150 degrés par rapport audit deuxième vérin.

Lorsqu'un personne veut escamoter le siège 1 dans la cavité 19, dans un premier temps, il tire sur la poignée de commande 61. Elle permet de simultanément débloquer le premier dispositif d'articulation 9 et le dispositif de verrouillage 13. Incidemment, le dossier 3 s'escamote ainsi sur l'assise 3 et permet en même temps de détacher les pieds 27 par rapport à l'axe 37. Dans un deuxième temps en tirant toujours la poignée 61, l'utilisateur tire sur l'avant du siège rabattu afin de libérer les pieds 27 de l'axe 37.

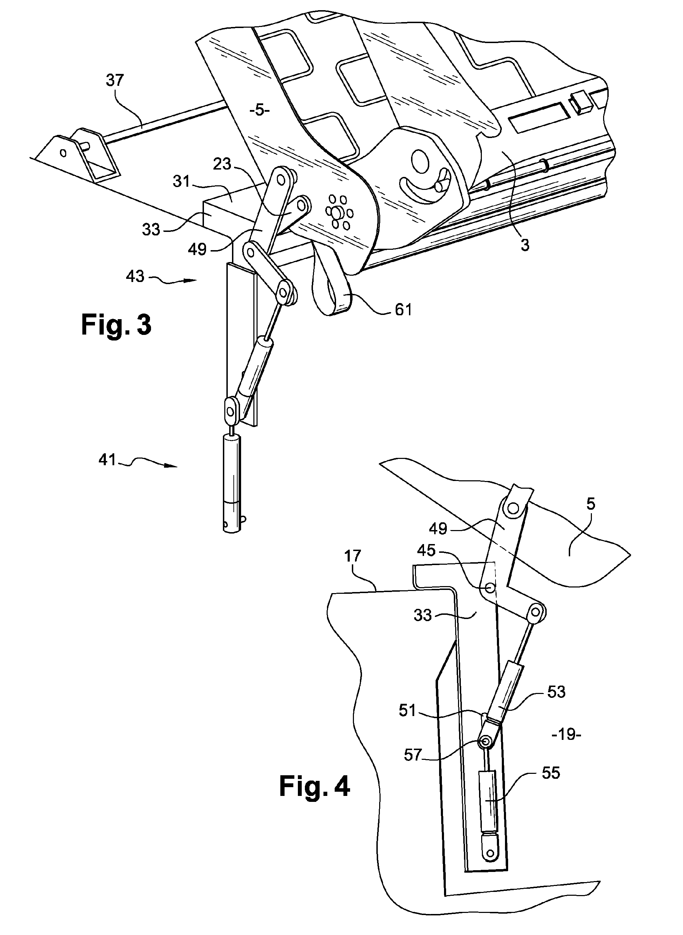

A l'initiation du deuxième temps, le dispositif d'assistance 15 commence à agir, c'est pourquoi, préférentiellement, la première phase d'assistance comme expliqué ci-avant est faible pour permettre à l'utilisateur de facilement libérer les pieds 27 de l'assise 5. La fin du deuxième temps correspond donc à la fin de la première phase d'assistance et est visible aux figures 3 et 4. Elle correspond à un travail exclusif en compression du deuxième vérin 55 qui est borné par le glissement de l'axe 57 contre la gorge 51. Aux figures 3 et 4, l'axe 57 étant en butée contre l'extrémité de la gorge 51, la compression du deuxième vérin 55 n'est plus possible, c'est la fin de la première phase d'assistance et, incidemment, celle du deuxième temps.

Dans un troisième temps, l'utilisateur tirant toujours l'avant du siège 1, la deuxième phase d'assistance débute. Elle correspond au travail en compression exclusif du premier vérin 53. Cette deuxième phase d'assistance permet d'amortir la force de gravité du siège 1 dont l'arrière du dossier 3 fait sensiblement face au creux de la cavité 19. Dans ce troisième temps, l'assise 5 fournit donc par les moyens de transmission mécanique 43 sa force de gravité à l'extrémité du premier vérin 53 qui la compense partiellement du fait de sa force développée. Le siège 1 rabattu n'a alors plus à être tiré et descend de manière amortie vers la cavité 19.

Dans ce troisième temps, le dispositif de rétraction 81 commencent à agir afin de rétracter les pieds 27 dans l'assise 5. Cela signifie qu'uniquement par la force de gravité, le siège 1 descend de manière amortie vers le creux 19 tout en escamotant les pieds 27 dans son assise 5.

Dans un quatrième et dernier temps, on obtient un plancher 17 sensiblement uniforme et parallèle au dessous de l'assise 5 comme visible aux figures 5 et 6. A ces figures, on remarque alors que les deux vérins 53 et 55 sont sensiblement colinéaires et de longueurs minimales. On s'aperçoit ainsi que le deuxième vérin 55 ne change pas de direction pendant le mouvement d'escamotage au contraire du premier vérin 53. Finalement, grâce à la géométrie du bras 49, le siège 1 rabattu est maintenu escamoté dans le creux 19 par poussée du vérin 53 ce qui permet d'obtenir avantageusement une position escamotée très sable.

Le mouvement d'extraction du siège 1 de sa position escamotée vers sa position utile est sensiblement inverse à celui d'escamotage. Ainsi, passé l'effort nécessaire à initier le déplacement du bras 49, il suffit de soulever le siège 1 par l'assise 5 avec la première phase avec l'assistance de la force développée par le premier vérin 53 qui permet en même temps de sortir les pieds 27 de l'assise 5. Puis, il suffit de relâcher le siège 1 avec une deuxième phase avec l'assistance de la force d'amortissement du deuxième vérin 55 afin que les pieds 27 se reverrouillent automatiquement sur l'axe 37. Enfin, il ne reste plus à l'utilisateur qu'à relever le dossier 3 pour que le siège 1 soit en position utile comme visible aux figures 1 et 2.

Bien entendu, la présente invention ne se limite pas à l'exemple illustré mais est susceptible de diverses variantes et modifications qui apparaîtront à l'homme de l'art. En particulier, le dispositif d'assistance 15 peut être adapté à des configurations différentes quant à, par exemple, la cavité 19, au plancher 17 ou encore à la poignée de commande 61.

## Revendications

1. Siège (1) comportant un système d'escamotage (7) comprenant un premier dispositif d'articulation (9) permettant de rabattre le dossier (3) sur l'assise (5) et un deuxième dispositif d'articulation (11) permettant d'escamoter le siège (1) rabattu dans une cavité (19) adjacente **caractérisé en ce que** le système d'escamotage (7) comprend en outre un dispositif d'assistance (15) audit deuxième dispositif d'articulation afin d'aider à l'escamotage et à l'extraction dudit siège par rapport à ladite cavité.

2. Siège (1) selon la revendication 1, **caractérisé en ce que** le dispositif d'assistance (15) comporte des moyens amortisseurs (41) solidaires de ladite cavité et des moyens de transmission mécanique (43) montés pivotants entre l'assise (5) dudit siège et lesdits moyens amortisseurs permettant au dispositif d'assistance (15) de fonctionner de manière déportée par rapport au siège (1).

3. Siège (1) selon la revendication 2, **caractérisé en ce que** les moyens amortisseurs (41) comportent un premier vérin (53) dont les extrémités sont montées pivotantes respectivement sur lesdits moyens de transmission mécanique et la première extrémité d'un deuxième vérin (55), la deuxième extrémité du deuxième vérin (55) étant montée dans ladite cavité afin de permettre le découplage du mouvement d'assistance en deux phases.

4. Siège (1) selon la revendication 3, **caractérisé en ce que** l'axe de pivotement (57) entre les deux vérins (53, 55) est monté mobile dans une gorge (51) afin de faciliter le fractionnement du travail consécutif de chaque vérin (53, 55).

5. Siège (1) selon la revendication 3 ou 4, **caractérisé en ce que** la direction du corps du deuxième vérin (55) est constante pendant ledit mouvement d'assistance.

6. Siège (1) selon l'une des revendications 3 à 5, **caractérisé en ce que** la direction du corps du premier vérin (53) est variable pendant ledit mouvement d'escamotage.

7. Siège (1) selon l'une des revendications 3 à 6, **caractérisé en ce que** le premier vérin (53) comporte une force développée supérieure au deuxième vérin (55) afin de faciliter la consécutivité du travail des vérins (53, 55).

8. Siège (1) selon l'une des revendications 2 à 7, **caractérisé en ce que** les moyens de transmission mécanique (43) comportent un bras (49) sensiblement en L dont le coin est monté pivotant par rapport à ladite cavité.

9. Siège (1) selon l'une des revendications précédentes, **caractérisé en ce qu'**il comporte plusieurs dispositifs d'assistance (15).

10. Véhicule automobile **caractérisé en ce qu'**il comporte au moins un siège (1) conforme à l'une des revendications précédentes.
